# EUROPEAN PATENT APPLICATION

(11) **EP 3 771 005 A1**
(43) Date of publication of application: **27.01.2021**
(21) Application number: 19771789.5
(22) Date of filing: 18.03.2019
(51) Int. Cl.: H01M 4/62, H01M 4/02, H01M 4/04, H01M 4/13, H01M 4/139

(54) **SECONDARY BATTERY BINDER COMPOSITION, SECONDARY BATTERY ELECTRODE CONDUCTIVE PASTE, SECONDARY BATTERY ELECTRODE SLURRY COMPOSITION, METHOD FOR PRODUCING SECONDARY BATTERY ELECTRODE SLURRY COMPOSITION, SECONDARY BATTERY ELECTRODE, AND SECONDARY BATTERY**

(30) Priority: 23.03.2018 JP 2018056999; 16.11.2018 JP 2018215914
(71) Applicant: Zeon Corporation, Tokyo 100-8246 (JP)
(72) Inventor: TAKAHASHI, Naoki, Tokyo 100-8246 (JP); MURASE, Tomoya, Tokyo 100-8246 (JP); KOHINATA, Yuko, Tokyo 100-8246 (JP)
(74) Representative: Hansen, Norbert
(86) International application number: PCT/JP2019/011243
(87) International publication number: WO 2019/181871

(57) **Abstract**

A binder composition for a secondary battery contains a solvent and a polymer including a nitrile group-containing monomer unit, an aromatic vinyl monomer unit, and a linear alkylene structural unit. The polymer has a viscosity of not less than 10 mPa·s and not more than 400 mPa·s as an N-methyl-2-pyrrolidone solution of 8 mass% in concentration.

## Description

### TECHNICAL FIELD

The present disclosure relates to a binder composition for a secondary battery, a conductive material paste for a secondary battery electrode, a slurry composition for a secondary battery electrode, a method of producing a slurry composition for a secondary battery electrode, an electrode for a secondary battery, and a secondary battery.

### BACKGROUND

Secondary batteries such as lithium ion secondary batteries have characteristics such as compact size, light weight, high energy-density, and the ability to be repeatedly charged and discharged, and are used in a wide range of applications. Consequently, in recent years, studies have been made to improve battery members such as electrodes for the purpose of achieving even higher secondary battery performance.

An electrode used in a secondary battery such as a lithium ion secondary battery generally includes a current collector and an electrode mixed material layer formed on the current collector. This electrode mixed material layer is formed by, for example, applying a slurry composition containing an electrode active material, a binder-containing binder composition, and so forth onto the current collector, and then drying the applied slurry composition.

In order to further improve the performance of secondary batteries, attempts have been made in recent years to improve binder compositions used in electrode mixed material layer formation.

In one specific example, Patent Literature (PTL) 1 discloses that an electrode of a lithium ion secondary battery that maintains good electric capacity is produced by using a binder composition for a lithium ion secondary battery that contains a polymer dispersed in an organic dispersion medium and in which the difference between the solubility parameter (SP value) of the polymer and the SP value of the organic dispersion medium is within a range of 1 (cal/cm³)^{1/2} to 10 (cal/cm³)^{1/2}.

In another specific example, PTL 2 discloses that cycle characteristics and output characteristics of a secondary battery are improved by setting the proportional content of an aromatic vinyl polymerization unit as a specific amount in a binder that includes a polymerization unit including a nitrile group, an aromatic vinyl polymerization unit, a polymerization unit including a hydrophilic group, and a linear alkylene polymerization unit having a carbon number of 4 or more.

### CITATION LIST

### Patent Literature

PTL 1: JP-H11-288720A
PTL 2: JP2013-179040A

### SUMMARY

### (Technical Problem)

An electrode mixed material layer may contain a conductive material in order to ensure electrical contact amongst an electrode active material and form good conduction paths. Moreover, it is desirable for a conductive material to be well dispersed in a slurry composition that is to be used to form an electrode mixed material layer containing the conductive material from a viewpoint of enabling good formation of the electrode mixed material layer and improving secondary battery performance.

However, in a slurry composition in which a conventional binder composition such as described above is used, there are cases in which a conductive material aggregates and cannot be well dispersed. Moreover, in an electrode produced using such a slurry composition, it may not be possible to achieve good formation of conduction paths in an electrode mixed material layer or to achieve good formation of an electrode mixed material layer having high uniformity. There have also been cases in which battery resistance has increased and output characteristics have deteriorated in a secondary battery in which such an electrode is used. Furthermore, it is desirable that components contained in a slurry composition, such as a binder, do not readily condense (i.e., that the slurry composition has excellent dispersion stability).

Accordingly, one object of the present disclosure is to provide a binder composition for a secondary battery that enables good dispersion of a conductive material and with which a slurry composition having excellent dispersion stability is obtained.

Another object of the present disclosure is to provide a conductive material paste for a secondary battery electrode in which a conductive material is well dispersed and that has excellent dispersion stability.

Another object of the present disclosure is to provide a slurry composition for a secondary battery electrode in which a conductive material is well dispersed and that has excellent dispersion stability.

Another object of the present disclosure is to provide a method of producing the aforementioned slurry composition for a secondary battery electrode.

Another object of the present disclosure it to provide an electrode for a secondary battery that can sufficiently improve battery characteristics of a secondary battery, and also a secondary battery that has excellent battery characteristics such as output characteristics.

### (Solution to Problem)

The inventors conducted diligent investigation with the aim of solving the problems set forth above. The inventors discovered that a conductive material can be well dispersed in a slurry composition for a secondary battery electrode and that dispersion stability of the slurry composition for a secondary battery electrode can be increased by producing the slurry for a secondary battery electrode using a binder composition for a secondary battery containing a polymer that includes specific monomer and structural units described in detail below and that has a viscosity within a specific range as an N-methyl-2-pyrrolidone (hereinafter, also referred to simply as "NMP") solution of 8 mass% in concentration. The inventors completed the present disclosure based on these findings.

Specifically, the present disclosure aims to advantageously solve the problems set forth above, and a presently disclosed binder composition for a secondary battery comprises: a polymer including a nitrile group-containing monomer unit, an aromatic vinyl monomer unit, and a linear alkylene structural unit; and a solvent, wherein the polymer has a viscosity of not less than 10 mPa·s and not more than 400 mPa·s as an N-methyl-2-pyrrolidone solution of 8 mass% in concentration. Through inclusion of a polymer that includes a nitrile group-containing monomer unit, an aromatic vinyl monomer unit, and a linear alkylene structural unit and that has a viscosity of not less than 10 mPa·s and not more than 400 mPa·s as an N-methyl-2-pyrrolidone solution of 8 mass% in concentration in this manner, a conductive material can be well dispersed when a slurry composition for a secondary battery electrode is produced using the binder composition for a secondary battery, and dispersion stability of the slurry composition for a secondary battery electrode can be increased.

Note that the "viscosity" of a polymer as an N-methyl-2-pyrrolidone solution of 8 mass% in concentration can be determined by a method described in the EXAMPLES section of the present specification.

In the presently disclosed binder composition for a secondary battery, the polymer preferably includes the aromatic vinyl monomer unit in a proportion of not less than 5 mass% and not more than 70 mass%. When the proportion constituted by the aromatic vinyl monomer unit in the polymer is within the range set forth above, reduction of solubility of the polymer in a solvent such as NMP is inhibited, dispersibility of a conductive material in a slurry composition for a secondary battery electrode produced using the binder composition for a secondary battery can be improved, and dispersion stability of the slurry composition for a secondary battery electrode can be improved.

In the presently disclosed binder composition for a secondary battery, the weight-average molecular weight of the polymer is preferably 10,000 or more, and more preferably 20,000 or more, and is preferably 200,000 or less, and more preferably 90,000 or less. Through the weight-average molecular weight of the polymer being not less than 10,000 and not more than 200,000, dispersion stability of a slurry composition for a secondary battery electrode produced using the binder composition for a secondary battery can be further improved, and, when a secondary battery is produced using the slurry composition for a secondary battery electrode, excessive swelling of the polymer in electrolyte solution can be inhibited, and an increase of battery resistance of the secondary battery can be suppressed. Moreover, through the weight-average molecular weight of the polymer being not less than 20,000 and not more than 90,000, dispersibility of a conductive material can be further improved when a slurry composition for a secondary battery electrode is produced, and dispersion stability of the slurry composition for a secondary battery electrode can be further improved.

The "weight-average molecular weight" of a polymer can be measured by a method described in the EXAMPLES section of the present specification.

Moreover, the present disclosure aims to advantageously solve the problems set forth above, and a presently disclosed conductive material paste for a secondary battery electrode comprises: any one of the binder compositions for a secondary battery set forth above; and a conductive material. By using the binder composition for a secondary battery set forth above in this manner, the conductive material can be well dispersed in the conductive material paste for a secondary battery electrode, and dispersion stability of the conductive material paste for a secondary battery electrode can be increased. Moreover, when an electrode active material or the like is added to the conductive material paste for a secondary battery electrode to produce a slurry composition for a secondary battery electrode, the conductive material can be well dispersed in the slurry composition for a secondary battery electrode.

Furthermore, the present disclosure aims to advantageously solve the problems set forth above, and a presently disclosed slurry composition for a secondary battery electrode comprises: any one of the binder compositions for a secondary battery set forth above; an electrode active material; and a conductive material. By using the binder composition for a secondary battery set forth above in this manner, the conductive material can be well dispersed in the slurry composition for a secondary battery electrode, and dispersion stability of the slurry composition for a secondary battery electrode can be increased.

Also, the present disclosure aims to advantageously solve the problems set forth above, and a presently disclosed method of producing a slurry composition for a secondary battery electrode is a method of producing the slurry composition for a secondary battery electrode set forth above, comprising: a first step of mixing the conductive material, the polymer, and the solvent to obtain a conductive material paste; and a second step of mixing the conductive material paste and the electrode active material. By adopting a method of producing a slurry composition for a secondary battery electrode that includes a first step of mixing a conductive material, a polymer, and a solvent to obtain a conductive material paste and a second step of mixing the conductive material paste and an electrode active material in this manner, it is possible to efficiently produce a slurry composition for a secondary battery electrode that has excellent conductive material dispersibility and dispersion stability.

Moreover, the present disclosure aims to advantageously solve the problems set forth above, and a presently disclosed electrode for a secondary battery comprises an electrode mixed material layer formed using the slurry for a secondary battery electrode set forth above. Using the slurry composition for a secondary battery electrode set forth above in this manner enables good formation of an electrode mixed material layer and sufficient improvement of battery characteristics of a secondary battery in which the electrode for a secondary battery is used.

Furthermore, the present disclosure aims to advantageously solve the problems set forth above, and a presently disclosed secondary battery comprises the electrode for a secondary battery set forth above. Using the electrode for a secondary battery set forth above in this manner reduces battery resistance, and thus makes it possible to provide a secondary battery having excellent battery characteristics such as output characteristics.

### (Advantageous Effect)

According to the present disclosure, it is possible to provide a binder composition for a secondary battery that enables good dispersion of a conductive material and with which a slurry composition having excellent dispersibility is obtained.

Moreover, according to the present disclosure, it is possible to provide a conductive material paste for a secondary battery electrode in which a conductive material is well dispersed and that has excellent dispersion stability.

Furthermore, according to the present disclosure, it is possible to provide a slurry composition for a secondary battery electrode in which a conductive material is well dispersed and that has excellent dispersion stability.

Also, according to the present disclosure, it is possible to provide a method of efficiently producing the aforementioned slurry composition for a secondary battery electrode.

Moreover, according to the present disclosure, it is possible to provide an electrode for a secondary battery that can sufficiently improve battery characteristics of a secondary battery, and also a secondary battery that has excellent battery characteristics such as output characteristics.

### DETAILED DESCRIPTION

The following provides a detailed description of embodiments of the present disclosure.

The presently disclosed binder composition for a secondary battery (hereinafter, also referred to simply as a "binder composition") can be used in production of a conductive material paste for a secondary battery electrode or a slurry composition for a secondary battery electrode (hereinafter, also referred to simply as a "slurry composition"). Moreover, a conductive material paste for a secondary battery electrode and a slurry composition for a secondary battery electrode produced using the presently disclosed binder composition for a secondary battery can be used in production of an electrode of a secondary battery such as a lithium ion secondary battery. Furthermore, the presently disclosed method of producing a slurry composition for a secondary battery electrode enables efficient production of the presently disclosed slurry composition for a secondary battery electrode. Also, a feature of the presently disclosed secondary battery is that it includes an electrode for a secondary battery produced using the presently disclosed slurry composition for a secondary battery electrode. The presently disclosed binder composition for a secondary battery electrode is preferably used in production of a slurry composition for a secondary battery electrode after being mixed with a conductive material to produce a conductive material paste for a secondary battery electrode that contains the binder composition for a secondary battery electrode and the conductive material.

Note that the presently disclosed binder composition for a secondary battery, conductive material paste for a secondary battery electrode, and slurry composition for a secondary battery electrode can be particularly suitably used in formation of a positive electrode of a secondary battery. The presently disclosed binder composition for a secondary battery can also be used in production of a slurry composition for a secondary battery porous membrane. Moreover, the slurry composition for a secondary battery porous membrane can be used to produce a porous membrane for a secondary battery and a secondary battery that includes the porous membrane for a secondary battery.

### (Binder composition for secondary battery)

The presently disclosed binder composition for a secondary battery contains a specific polymer that is described in detail below and a solvent, and can optionally further contain other polymers and/or other components.

The presently disclosed binder composition for a secondary battery can be used in production of a conductive material paste for a secondary battery electrode that contains a conductive material or a slurry composition for a secondary battery electrode that contains an electrode active material and a conductive material. By using the presently disclosed binder composition, it is possible to cause good dispersion of a conductive material and to obtain a conductive material paste or slurry composition for a secondary battery electrode.

Although the mechanism by which this is achieved is not clear, it is presumed to be as follows. Specifically, it is thought that as a result of the binder composition containing a polymer that is described in detail below, the polymer is well adsorbed onto the surface of a conductive material so as to inhibit aggregation of the conductive material and enable good dispersion of the conductive material. It is also thought that as a result of the viscosity of the polymer being within a specific range, aggregation of the polymer and aggregation of components contained in a slurry composition via the polymer can be inhibited, and dispersion stability can be improved.

### <Polymer>

The polymer is required to include a nitrile group-containing monomer unit, an aromatic vinyl monomer unit, and a linear alkylene structural unit as repeating units, and may optionally further include repeating units other than the nitrile group-containing monomer unit, the aromatic vinyl monomer unit, and the linear alkylene structural unit (hereinafter, also referred to as "other repeating units"). The polymer is also required to have a viscosity of not less than 10 mPa·s and not more than 400 mPa·s as an NMP solution of 8 mass% in concentration.

### [Nitrile group-containing monomer unit]

The nitrile group-containing monomer unit is a repeating unit that is derived from a nitrile group-containing monomer. The polymer can display excellent flexibility and binding capacity as a result of including the nitrile group-containing monomer unit. Consequently, an electrode mixed material layer that is formed using a slurry composition for a secondary battery electrode containing the presently disclosed binder composition for a secondary battery electrode can display excellent peel strength and flexibility.

Examples of nitrile group-containing monomers that can be used to form the nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile.

Of these monomers, acrylonitrile and methacrylonitrile are preferable as the nitrile group-containing monomer from a viewpoint of increasing binding capacity of the polymer, with acrylonitrile being more preferable.

One of these nitrile group-containing monomers may be used individually, or two or more of these nitrile group-containing monomers may be used in combination.

The proportional content of the nitrile group-containing monomer unit in the polymer when all repeating units in the polymer are taken to be 100 mass% is preferably 10 mass% or more, and more preferably 15 mass% or more, and is preferably 60 mass% or less, and preferably 45 mass% or less. When the proportional content of the nitrile group-containing monomer unit in the polymer is not less than any of the lower limits set forth above, reduction of solubility of the polymer in a solvent such as NMP can be inhibited, and a conductive material can be better dispersed in a slurry composition produced using the binder composition. In addition, binding capacity of the polymer can be improved, and electrode peel strength of an electrode formed using a slurry composition can be increased. Moreover, when the proportional content of the nitrile group-containing monomer unit in the polymer is not more than any of the upper limits set forth above, excessive swelling of the polymer in electrolyte solution can be inhibited when a secondary battery is produced using a slurry composition, and an increase of battery resistance of the secondary battery can be suppressed.

Note that the "proportion constituted by each repeating unit (monomer unit and structural unit) in a polymer" can be measured by a nuclear magnetic resonance (NMR) method such as ¹H-NMR.

### [Aromatic vinyl monomer unit]

The aromatic vinyl monomer unit is a repeating unit that is derived from an aromatic vinyl monomer. It is presumed that as a result of the polymer including an aromatic vinyl monomer unit, the polymer is well adsorbed onto the surface of a conductive material through interaction between the aromatic vinyl monomer unit and the conductive material in a slurry composition for a secondary battery produced using the binder composition, and thus aggregation of the conductive material is inhibited.

Examples of aromatic vinyl monomers that can be used to form the aromatic vinyl monomer unit include styrene, α-methylstyrene, vinyltoluene, and divinylbenzene.

One of these aromatic vinyl monomers may be used individually, or two or more of these aromatic vinyl monomers may be used in combination.

The proportional content of the aromatic vinyl monomer unit in the polymer when all repeating units in the polymer are taken to be 100 mass% is preferably 5 mass% or more, and more preferably 10 mass% or more, and is preferably 70 mass% or less, more preferably 60 mass% or less, and even more preferably 50 mass% or less. When the proportional content of the aromatic vinyl monomer unit in the polymer is not less than any of the lower limits set forth above, reduction of solubility of the polymer in a solvent such as NMP can be further inhibited, and a conductive material can be even better dispersed in a slurry composition produced using the binder composition. Moreover, when the proportional content of the aromatic vinyl monomer unit in the polymer is not more than any of the upper limits set forth above, dispersion stability of a slurry composition produced using the binder composition can be further improved.

### [Linear alkylene structural unit]

The linear alkylene structural unit is a repeating unit composed of only an alkylene structure represented by a general formula -CₙH₂ₙ- (n is an integer of 2 or more). The carbon number of the alkylene structural unit is preferably not less than 4 and not more than 12 (i.e., n in the preceding general formula is preferably an integer of not less than 4 and not more than 12) from a viewpoint of further improving dispersion stability of a slurry composition produced using the binder composition.

Examples of methods by which the linear alkylene structural unit can be introduced into the polymer include the following methods (1) and (2), but are not specifically limited thereto.
(1) A method in which a polymer is produced from a monomer composition containing a conjugated diene monomer and then the polymer is hydrogenated to convert a conjugated diene monomer unit to an alkylene structural unit
(2) A method in which a polymer is produced from a monomer composition containing a 1-olefin monomer

Of these methods, method (1) is preferable because production of the polymer is simple.

The conjugated diene monomer used in method (1) may be a conjugated diene compound having a carbon number of 4 or more such as 1,3-butadiene, isoprene, 2,3-dimethyl-1,3-butadiene, or 1,3-pentadiene, for example. Of these conjugated diene compounds, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit). Selective hydrogenation of the conjugated diene monomer unit can be carried out by a commonly known method such as an oil-layer hydrogenation method or a water-layer hydrogenation method.

The 1-olefin monomer used in method (2) may be 1-butene, 1-hexene, or the like, for example.

One of these conjugated diene monomers or 1-olefin monomers may be used individually, or two or more of these conjugated diene monomers or 1-olefin monomers may be used in combination.

The proportional content of the linear alkylene structural unit in the polymer when all repeating units in the polymer are taken to be 100 mass% is preferably 10 mass% or more, and more preferably 15 mass% or more, and is preferably 60 mass% or less, and more preferably 50 mass% or less. When the proportional content of the linear alkylene structural unit in the polymer is not less than any of the lower limits set forth above, dispersion stability of a slurry composition produced using the binder composition can be even further improved. Moreover, when the proportional content of the linear alkylene structural unit in the polymer is not more than any of the upper limits set forth above, reduction of solubility of the polymer in a solvent such as NMP can be even further inhibited, and a conductive material can be even better dispersed in a slurry composition produced using the binder composition.

### [Other repeating units]

Examples of other repeating units besides the nitrile group-containing monomer unit, aromatic vinyl monomer unit, and linear alkylene structural unit described above include, without any specific limitations, any repeating unit derived from a known monomer that is copolymerizable with the monomers described above. For example, a hydrophilic group-containing monomer unit or the like may be included as another repeating unit.

### [Hydrophilic group-containing monomer unit]

The hydrophilic group-containing monomer unit is a repeating unit that is derived from a hydrophilic group-containing monomer.

Examples of hydrophilic group-containing monomers that can be used to form the hydrophilic group-containing monomer unit include polymerizable monomers that include a hydrophilic group. Specific examples of hydrophilic group-containing monomers that can be used include monomers including an acidic group-containing monomer unit, a hydroxyl group-containing monomer unit, or a salt thereof. Examples of acidic group-containing monomers include carboxyl group-containing monomers, sulfo group-containing monomers, and phosphate group-containing monomers.

Examples of carboxyl group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxyl group through hydrolysis can also be used as a carboxyl group-containing monomer.

Other examples include monoesters and diesters of α,β-ethylenically unsaturated polybasic carboxylic acids such as maleic acid monoesters, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)acryl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)acryl" is used to indicate "acryl" and/or "methacryl".

Examples of phosphate group-containing monomers include 2-(meth)acryloyloxyethyl phosphate, methyl-2-(meth)acryloyloxy ethyl phosphate, and ethyl-(meth)acryloyloxyethyl phosphate.

In the present disclosure, "(meth)acryloyl" is used to indicate "acryloyl" and/or "methacryloyl".

Examples of monomers including a hydroxyl group-containing monomer unit include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula CH₂=CR¹-COO-(C_{q}H_{2q}O)ₚ-H (where p represents an integer of 2 to 9, q represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

In the present disclosure, "(meth)allyl" is used to indicate "allyl" and/or "methallyl".

One of these monomers may be used individually, or two or more of these monomers may be used in combination.

The proportional content of the hydrophilic group-containing monomer unit in the polymer when all repeating units in the polymer are taken to be 100 mass% is preferably 0.5 mass% or more, and more preferably 1 mass% or more, and is preferably 10 mass% or less, and more preferably 5 mass% or less. When the proportional content of the hydrophilic group-containing monomer unit in the polymer is not less than any of the lower limits set forth above, the electrode peel strength of an electrode formed using the binder composition can be increased. Moreover, when the proportional content of the hydrophilic group-containing monomer unit in the polymer is not more than any of the upper limits set forth above, reduction of solubility of the polymer in a solvent such as NMP can be inhibited, and a conductive material can be sufficiently dispersed in a conductive material paste or slurry composition for a secondary battery electrode produced using the binder composition.

Besides the repeating units described above, the polymer may include, as another monomer unit, a repeating unit that is derived from another monomer that is copolymerizable with the monomers forming those repeating units. The proportional content of the other monomer unit in the polymer when all repeating units in the polymer are taken to be 100 mass% is preferably 30 mass% or less, more preferably 20 mass% or less, and even more preferably 10 mass% or less. Of course, the polymer may be a polymer that does not include other monomer units. In other words, the proportional content of other monomer units in the polymer may be substantially 0 mass%.

Examples of other monomers that can be used to form other monomer units include acrylic acid alkyl esters (for example, methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate) and methacrylic acid alkyl esters (for example, methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate) that can form a (meth)acrylic acid ester monomer unit; fluorine-containing vinyl compounds such as fluoroethyl vinyl ether, fluoropropyl vinyl ether, vinyl pentafluorobenzoate, difluoroethylene, and tetrafluoroethylene; non-conjugated diene compounds such as 1,4-pentadiene, 1,4-hexadiene, vinyl norbornene, and dicyclopentadiene; α-olefin compounds such as ethylene, propylene, 1-butene, 4-methyl-1-pentene, 1-hexene, and 1-octene; alkoxyalkyl esters of α,β-ethylenically unsaturated carboxylic acids such as methoxyethyl (meth)acrylate, methoxypropyl (meth)acrylate, and butoxyethyl (meth)acrylate; divinyl compounds such as divinylbenzene; di(meth)acrylic acid esters such as ethylene di(meth)acrylate, diethylene glycol di(meth)acrylate, and ethylene glycol di(meth)acrylate; trimethacrylic acid esters such as trimethylolpropane tri(meth)acrylate; other polyfunctional ethylenically unsaturated monomers; and self-crosslinkable compounds such as N-methylol(meth)acrylamide and N,N'-dimethylol(meth)acrylamide. Of these other monomers, acrylic acid alkyl esters are preferable and acrylic acid alkyl esters in which the carbon number of an alkyl group bonded to a non-carbonyl oxygen atom is 2 to 12 are more preferable because (i) they display solubility in NMP, which is preferably used as a solvent of a slurry composition for a positive electrode, but do not elute into electrolyte solution, and (ii) they can improve flexibility of a positive electrode, can inhibit peeling of a positive electrode during production of a wound cell, and provide a secondary battery in which the positive electrode is used with excellent characteristics (cycle characteristics, etc.). Of such acrylic acid alkyl esters, ethyl acrylate, n-butyl acrylate, 2-ethylhexyl acrylate, nonyl acrylate, and lauryl acrylate are particularly preferable.

### [Viscosity]

The viscosity of the polymer set forth above as an NMP solution of 8 mass% in concentration is required to be not less than 10 mPa·s and not more than 400 mPa·s, and is preferably 150 mPa·s or less. When the viscosity of the polymer as an NMP solution of 8 mass% in concentration is 10 mPa·s or more, a slurry composition produced using the binder composition has good dispersion stability. Moreover, when the viscosity of the polymer as an NMP solution of 8 mass% in concentration is 400 mPa·s or less, dispersibility of a conductive material in a slurry composition is good.

### [Weight-average molecular weight of polymer]

The weight-average molecular weight (Mw) of the polymer is preferably 10,000 or more, and more preferably 20,000 or more, and is preferably 200,000 or less, and more preferably 90,000 or less. When the weight-average molecular weight of the polymer is 10,000 or more, excessive swelling of the polymer in electrolyte solution can be further inhibited when a secondary battery is produced using a slurry composition that is produced using the binder composition for a secondary battery, and an increase of battery resistance of the secondary battery can be further suppressed. Moreover, when the weight-average molecular weight of the polymer is 200,000 or less, dispersibility of a conductive material can be further improved when a slurry composition is produced, and dispersion stability of the slurry composition can be further improved.

### [Glass-transition temperature (Tg)]

The glass-transition temperature (Tg) of the polymer is not specifically limited but is preferably higher than -30°C, and is preferably 70°C or lower, more preferably 50°C or lower, and even more preferably 30°C or lower. When the glass-transition temperature of the polymer is higher than the lower limit set forth above, dispersibility of a conductive material can be even further improved when a conductive material paste or slurry composition for a secondary battery electrode is produced using the presently disclosed binder composition. On the other hand, when the glass-transition temperature of the polymer is not higher than any of the upper limits set forth above, staining during roll pressing can be avoided and electrode flexibility can be improved when an electrode for a secondary battery is produced using a slurry composition that contains the presently disclosed binder composition.

The glass-transition temperature of the polymer can be adjusted through combination of various monomers.

Moreover, the glass-transition temperature of the polymer can be measured by a differential scanning calorimeter (DSC).

### [Iodine value]

The iodine value of the polymer is preferably 70 mg/100 mg or less, and more preferably 50 mg/100 mg or less. When the iodine value of the polymer is 70 mg/100 mg or less, dispersion stability of a conductive material paste or slurry composition for a secondary battery electrode produced using the binder composition can be further increased.

The iodine value can be determined in accordance with JIS K6235:2006.

### [Production method of polymer]

No specific limitations are placed on the method by which the polymer set forth above is produced. For example, the polymer can be produced by polymerizing a monomer composition containing the previously described monomers, optionally in the presence of a chain transfer agent, to obtain a copolymer, and then hydrogenating the obtained polymer.

The polymerization method of the polymer is not specifically limited, and any of solution polymerization, suspension polymerization, bulk polymerization, and emulsion polymerization may be used. Moreover, ionic polymerization, radical polymerization, living radical polymerization, or the like may be adopted as the polymerization reaction.

Commonly used emulsifiers, dispersants, polymerization initiators, polymerization aids, and the like may be used in the polymerization in an amount that is also the same as commonly used.

The proportional content of the polymer in the binder composition for a secondary battery, in terms of solid content, is preferably 0.01 mass% or more, and is preferably 20 mass% or less. When the proportional content of the polymer is within the range set forth above, a slurry composition for a secondary battery electrode can easily be produced using the binder composition for a secondary battery.

### <<Terminal structure of polymer>>

No specific limitations are placed on the terminal structure of the polymer. For example, the polymer may have a structure indicated by the following formula (I) at one terminal.

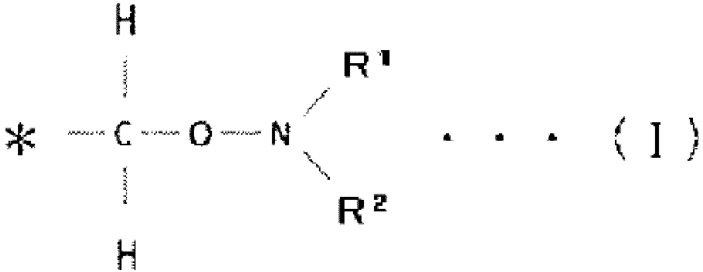

In formula (I), R¹ and R² each indicate an organic group independently of one another or indicate an organic group in which R¹ and R² combine to form a ring, and an asterisk (*) indicates a bonding site with a main chain terminal of the polymer.

Examples of R¹ and R² as the aforementioned organic group include linear and branched alkyl groups having a carbon number of 1 to 18, aromatic ring groups such as a phenyl group and a naphthyl group, a cyano group, and the like. The organic group is optionally substituted. Examples of possible substituents include alkyl groups having a carbon number of 1 to 12, a hydroxyl group, a carboxyl group, a sulfo group, and an aldehyde group, of which, alkyl groups having a carbon number of 1 to 6 are preferable. R¹ and R² may combine to form a ring.

Specific examples of structures represented by formula (I) include a structure represented by the following formula (II) and a structure represented by the following formula (III). Note that asterisks (*) in formula (II) and formula (III) each indicate a bonding site with a main chain terminal of the polymer.

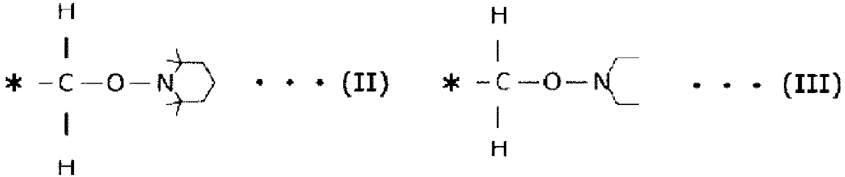

Although no specific limitations are placed on the method by which a polymer having the structure indicated by formula (I) at a terminal (hereinafter, referred to as polymer (I)) is produced, the polymer (I) can be produced by, for example, in polymerization of a monomer composition containing the previously described monomer by a known method, optionally in the presence of a chain transfer agent, to obtain a polymer, reacting a nitroxy radical compound such as 2,2,6,6-tetramethylpiperidine-1-oxyl (TEMPO) or a derivative thereof or a hydroxyamine derivative such as diethylhydroxyamine at a point at which the conversion rate of monomers to the polymer (I) is preferably 98% or less, more preferably 95% or less, and even more preferably 90% or less so as to introduce the structure represented by the above-described formula (I) at a terminal of the polymer.

The method of polymerization of the polymer (I) is not specifically limited and any of the previously described polymerization methods for the polymer can be used. Moreover, the polymerization reaction of the polymer (I) can be any of the previously described polymerization reactions for the polymer.

The polymer preferably includes a terminal structure other than the structure indicated by formula (I). The terminal structure other than the structure indicated by formula (I) may be a structure indicated by the following formula (IV), for example.

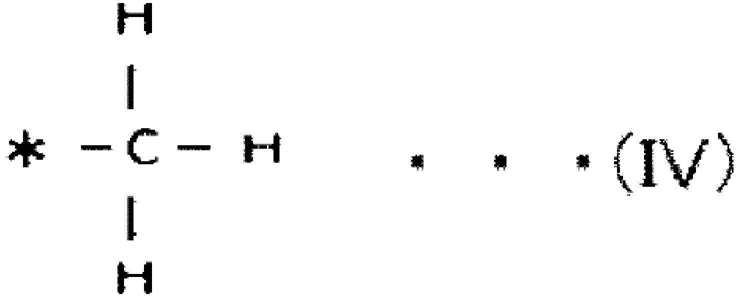

Note that an asterisk (*) in formula (IV) indicates a bonding site with a main chain terminal of the polymer.

### <Solvent>

An organic solvent can be used as the solvent of the binder composition for a secondary battery without any specific limitations. Examples of organic solvents that can be used include alcohols such as methanol, ethanol, n-propanol, isopropanol, n-butanol, isobutanol, t-butanol, pentanol, hexanol, heptanol, octanol, nonanol, decanol, and amyl alcohol, ketones such as acetone, methyl ethyl ketone, and cyclohexanone, esters such as ethyl acetate and butyl acetate, ethers such as diethyl ether, dioxane, and tetrahydrofuran, amide polar organic solvents such as N,N-dimethylformamide and N-methyl-2-pyrrolidone (NMP), and aromatic hydrocarbons such as toluene, xylene, chlorobenzene, orthodichlorobenzene, and paradichlorobenzene.

One of these organic solvents may be used individually, or two or more of these organic solvents may be used in combination.

Of these examples, NMP is preferable as the organic solvent.

The boiling point of the organic solvent at normal pressure (1 atm) is preferably 80°C or higher, more preferably 120°C or higher, and even more preferably 150°C or higher, and is preferably 250°C or lower, and more preferably 220°C or lower. When the boiling point of the organic solvent is not lower than any of the lower limits set forth above, a slurry composition that is suitable for application can be produced using the presently disclosed binder composition. On the other hand, when the boiling point of the organic solvent is not higher than any of the upper limits set forth above, a slurry composition that has been applied onto a current collector or the like can be dried at high-temperature.

### <Other polymer>

Any known polymer that can be used as a binder in the field of secondary batteries can be used as another polymer that is optionally contained in the presently disclosed binder composition for a secondary battery without any specific limitations other than that it is a polymer other than the polymer set forth above.

For example, a fluorine-containing polymer such as polyvinylidene fluoride (PVDF) or polyvinylidene fluoride-hexafluoropropylene (PVDF-HFP), polyacrylonitrile (PAN), or the like may be used as another polymer.

In a case in which the binder composition contains both the previously described polymer and another polymer, the proportional content of the other polymer in the binder composition when the total amount of the previously described polymer and other polymer, in terms of solid content, is taken to be 100 mass%, is 0 mass% or more, preferably more than 0 mass%, and more preferably 10 mass% or more, and is preferably 98 mass% or less, and more preferably 97 mass% or less. When the proportional content of the other polymer is not less than any of the lower limits set forth above, battery resistance can be further reduced when a secondary battery is produced using a slurry composition that contains the presently disclosed binder composition. On the other hand, when the proportional content of the other polymer is not more than any of the upper limits set forth above, sedimentation of components in a slurry composition can be inhibited.

### <Other components>

The presently disclosed binder composition for a secondary battery may contain other components that are commonly known for binder compositions. Examples of other components include wetting agents, leveling agents, and electrolyte solution decomposition inhibitors.

### <Production of binder composition for secondary battery>

The presently disclosed binder composition for a secondary battery can be produced by dissolving or dispersing, in the solvent, the previously described polymer and other polymers and/or other components that are optionally added. No specific limitations are placed on the specific mixing method.

Note that in a case in which the polymer is produced as a water dispersion, it is preferable that the water dispersion is mixed with the solvent, water is subsequently removed, and then the polymer is used in production of the binder composition.

### (Conductive material paste for secondary battery electrode)

The presently disclosed conductive material paste for a secondary battery electrode contains the binder composition for a secondary battery set forth above and a conductive material, and may optionally further contain other polymers and/or other components. In other words, the presently disclosed conductive material paste for a secondary battery electrode contains the previously described polymer, a conductive material, and a solvent, and may further contain other polymers and/or other components that can optionally be added. The presently disclosed conductive material paste for a secondary battery electrode enables good dispersion of the conductive material and has excellent dispersion stability as a result of containing the binder composition for a secondary battery set forth above.

The solid content concentration of the presently disclosed conductive material paste for a secondary battery electrode is preferably 1 mass% or more, and more preferably 3 mass% or more, and is preferably 20 mass% or less, and more preferably 15 mass% or less. When the solid content concentration of the conductive material paste for a secondary battery electrode is not less than any of the lower limits set forth above, effects of the conductive material can be well displayed. On the other hand, when the solid content concentration of the conductive material paste for a secondary battery electrode is not more than any of the upper limits set forth above, sufficient dispersion stability of the conductive material can be ensured.

### <Proportion of all solid content of binder composition relative to all solid content in conductive material paste for secondary battery electrode>

The proportion of all solid content in the binder composition relative to 100 mass% of all solid content in the conductive material paste for a secondary battery electrode is preferably 0.1 mass% or more, more preferably 1 mass% or more, and even more preferably 2 mass% or more, and is preferably 30 mass% or less, more preferably 25 mass% or less, and more preferably 20 mass% or less. When the proportion of all solid content in the binder composition relative to all solid content in the conductive material paste for a secondary battery electrode is not less than any of the lower limits set forth above, the conductive material can be well dispersed in the conductive material paste for a secondary battery electrode, and, as a result, the viscosity of the conductive material paste for a secondary battery electrode can be stabilized. On the other hand, when the proportion of all solid content in the binder composition relative to all solid content in the conductive material paste for a secondary battery electrode is not more than any of the upper limits set forth above, battery resistance of a secondary battery can be reduced when the secondary battery is produced using a slurry for a secondary battery electrode that contains the presently disclosed conductive material paste for a secondary battery electrode.

Note that no specific limitations are placed on the method by which the presently disclosed conductive material paste for a secondary battery electrode is produced. For example, the presently disclosed conductive material paste for a secondary battery electrode can be produced by mixing the binder composition for a secondary battery set forth above and the conductive material by any method. Also note that the conductive material contained in the conductive material paste for a secondary battery electrode is described in detail further below.

### (Slurry composition for secondary battery electrode)

The presently disclosed slurry composition for a secondary battery electrode contains the binder composition for a secondary battery set forth above, an electrode active material, and a conductive material, and may optionally further contain other polymers and/or other components. In other words, the presently disclosed slurry composition for a secondary battery electrode contains the previously described polymer, an electrode active material, a conductive material, and a solvent, and may optionally further contain other polymers and/or other components. As a result of the presently disclosed slurry composition for a secondary battery electrode containing the binder composition for a secondary battery set forth above, the conductive material can be well dispersed, and a slurry composition having excellent dispersion stability can be obtained. Consequently, an electrode for a secondary battery that includes an electrode mixed material layer formed using the presently disclosed slurry composition for a secondary battery electrode has good conduction paths formed in the electrode mixed material layer, and thus the electrode mixed material layer has high uniformity and the electrode for a secondary battery can cause a secondary battery to display excellent battery characteristics.

Although the following describes, as one example, a case in which the slurry composition for a secondary battery electrode is a slurry composition for a lithium ion secondary battery electrode, the presently disclosed slurry composition for a secondary battery electrode is not limited to the following example.

From a viewpoint of achieving excellent dispersibility of the conductive material, excellent close adherence to a current collector, and excellent dispersion stability of the slurry composition, all solid content in the binder composition relative to 100 mass% of all solid content in the slurry composition is preferably 0.1 mass% or more, more preferably 0.3 mass% or more, and even more preferably 0.5 mass% or more, and is preferably 5 mass% or less, more preferably 4 mass% or less, and even more preferably 3 mass% or less.

### <Electrode active material>

The electrode active material is a material that gives and receives electrons in an electrode of a secondary battery. An electrode active material for a lithium ion secondary battery is normally a material that can occlude and release lithium ions. Note that from a viewpoint of achieving a battery capacity in a practical range, the amount of the electrode active material relative to 100 mass% of all solid content in the slurry composition is preferably 90 mass% or more, and more preferably 92 mass% or more, and is preferably 99.5 mass% or less, and more preferably 99 mass% or less.

### [Positive electrode active material]

Specific examples of positive electrode active materials for a lithium ion secondary battery include, but are not specifically limited to, known positive electrode active materials such as lithium-containing cobalt oxide (LiCoO₂), lithium manganate (LiMn₂O₄), lithium-containing nickel oxide (LiNiO₂), a lithium-containing complex oxide of Co-Ni-Mn (Li(CoMnNi)O₂), a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a Li₂MnO₃-LiNiO₂-based solid solution, lithium-rich spinel compounds represented by Li₁₊ₓMn₂₋ₓO₄ (0 < x < 2), Li[Ni_{0.17}Li_{0.2}CO_{0.07}Mn₀.₅₆]O₂, and LiNi_{0.5}Mn_{1.5}O₄.

The amount and particle diameter of the positive electrode active material are not specifically limited and may be the same as those of conventionally-used positive electrode active materials.

### [Negative electrode active material]

Examples of negative electrode active materials for a lithium ion secondary battery include carbon-based negative electrode active materials, metal-based negative electrode active materials, and negative electrode active materials that are a combination thereof.

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

A metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal. Of these metal-based negative electrode active materials, active materials containing silicon (silicon-based negative electrode active materials) are preferred. One reason for this is that the capacity of a lithium ion secondary battery can be increased through use of a silicon-based negative electrode active material.

Examples of the silicon-based negative electrode active material include silicon (Si), a silicon-containing alloy, SiO, SiOₓ, and a composite material of conductive carbon and a Si-containing material obtained by coating or combining the Si-containing material with the conductive carbon.

The amount and particle diameter of the negative electrode active material are not specifically limited and may be the same as those of conventionally-used negative electrode active materials.

### <Conductive material>

The conductive material ensures electrical contact amongst the electrode active material. Examples of conductive materials that can be used include conductive carbon materials such as carbon black (for example, acetylene black, Ketjenblack® (Ketjenblack is a registered trademark in Japan, other countries, or both), furnace black, etc.), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layered and multi-layered graphene, and carbon non-woven fabric sheet obtained through pyrolysis of non-woven fabric made from polymer fiber; and fibers and foils of various metals.

One of these conductive materials may be used individually, or two or more of these conductive materials may be used in combination.

Of the examples given above, conductive carbon materials are preferable as the conductive material in terms of having excellent chemical stability.

The proportional content of the conductive material in the slurry composition for a secondary battery electrode relative to 100 mass% of all solid content in the slurry composition is preferably 0.1 mass% or more, and is preferably 3 mass% or less, more preferably 2 mass% or less, and even more preferably 1 mass% or less. When the proportional content of the conductive material is not less than the lower limit set forth above, sufficient electrical contact amongst the electrode active material can be ensured. On the other hand, when the proportional content of the conductive material is not more than any of the upper limits set forth above, sufficient stability of the slurry composition can be ensured, density of an electrode mixed material layer can be well maintained, and a secondary battery can be provided with sufficiently high capacity.

### <Other components>

Examples of other components that may be contained in the slurry composition include, but are not specifically limited to, the same other components as may be contained in the presently disclosed binder composition.

One other component may be used individually, or two or more other components may be used in combination.

### <Production of slurry composition for secondary battery electrode>

The presently disclosed slurry composition for a secondary battery electrode can be produced by dissolving or dispersing the above-described components in a solvent such as an organic solvent. In terms of mixing order, the components may be added all at once and mixed or may be added stepwise and mixed. A method in which the conductive material and the polymer are mixed in advance and then the electrode active material is added and mixed therewith is more preferable for improving dispersibility of the conductive material. Specifically, the slurry composition can be produced by mixing the above-described components and the solvent using a mixer such as a ball mill, a sand mill, a bead mill, a pigment disperser, a grinding machine, an ultrasonic disperser, a homogenizer, a planetary mixer, or a FILMIX. Note that the solvent contained in the binder composition may be used as a solvent in production of the slurry composition.

Although the following describes the presently disclosed method of producing a slurry composition for a secondary battery electrode as an example, the presently disclosed method of producing a slurry composition for a secondary battery electrode is not limited to the following example.

### [Production method of slurry composition for secondary battery electrode]

The presently disclosed method of producing a slurry composition for a secondary battery electrode is a method of producing the slurry composition for a secondary battery electrode set forth above that includes a first step of mixing a conductive material, a polymer, and a solvent to obtain a conductive material paste, and a second step of mixing the conductive material paste and an electrode active material. It should be noted that the conductive material, the polymer, and the solvent used in the presently disclosed method of producing a slurry composition for a secondary battery electrode can be the conductive material, the polymer, and the solvent that were described for the binder composition for a secondary battery and the slurry composition for a secondary battery electrode set forth above, and the preferred ratio thereof is the same as the preferred ratio of these components in the binder composition for a secondary battery and the slurry composition for a secondary battery electrode. Mixing of components in the first step and the second step can be performed by a known method.

### (Electrode for secondary battery)

The presently disclosed electrode for a secondary battery includes a current collector and an electrode mixed material layer formed on the current collector, wherein the electrode mixed material layer is formed using the presently disclosed slurry composition for a secondary battery electrode. In other words, the electrode mixed material layer contains at least a polymer, an electrode active material, and a conductive material. It should be noted that components contained in the electrode mixed material layer are components that were contained in the presently disclosed slurry composition for a secondary battery electrode, and the preferred ratio of these components in the electrode mixed material layer is the same as the preferred ratio of the components in the slurry composition.

The presently disclosed electrode for a secondary battery includes an electrode mixed material layer formed using a slurry composition that contains the presently disclosed binder composition for a secondary battery and has good conduction paths formed in the electrode mixed material layer. Consequently, battery resistance can be reduced when this electrode for a secondary battery is used, and thus a secondary battery having excellent battery characteristics such as output characteristics is obtained.

### <Production method of electrode for secondary battery>

The presently disclosed electrode for a secondary battery is produced, for example, through a step of applying the presently disclosed slurry composition onto a current collector (application step) and a step of drying the slurry composition that has been applied onto the current collector to form an electrode mixed material layer on the current collector (drying step).

### [Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may be made of, for example, iron, copper, aluminum, nickel, stainless steel, titanium, tantalum, gold, or platinum. One of these materials may be used individually, or two or more of these materials may be used in combination in a freely selected ratio.

### [Drying step]

The slurry composition on the current collector may be dried by any commonly known method without any specific limitations. Examples of drying methods that can be used include drying by warm, hot, or low-humidity air; drying in a vacuum; and drying by irradiation with infrared light, electron beams, or the like. Drying of the slurry composition on the current collector in this manner forms an electrode mixed material layer on the current collector and thereby provides an electrode for a secondary battery that includes the current collector and the electrode mixed material layer.

After the drying step, the electrode mixed material layer may be further subjected to a pressing process, such as mold pressing or roll pressing. The pressing process can improve close adherence between the electrode mixed material layer and the current collector.

### (Secondary battery)

The presently disclosed secondary battery includes a positive electrode, a negative electrode, an electrolyte solution, and a separator, and includes the presently disclosed electrode for a secondary battery as at least one of the positive electrode and the negative electrode. The presently disclosed secondary battery has reduced battery resistance and excellent battery characteristics such as output characteristics as a result of including the presently disclosed electrode for a secondary battery.

The presently disclosed secondary battery is preferably a secondary battery in which the presently disclosed electrode for a secondary battery is used as the positive electrode. Although the following describes, as one example, a case in which the secondary battery is a lithium ion secondary battery, the presently disclosed secondary battery is not limited to the following example.

### <Electrodes>

Any known electrode that is used in production of a secondary battery can be used without any specific limitations as an electrode other than the electrode for a secondary battery set forth above that can be used in the presently disclosed secondary battery. Specifically, an electrode obtained by forming an electrode mixed material layer on a current collector by a known production method may be used as an electrode other than the electrode for a secondary battery set forth above.

### <Separator>

The separator may be a separator such as described in JP2012-204303A, for example, but is not specifically limited thereto. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity of the secondary battery.

### <Electrolyte solution>

The electrolyte solution is normally an organic electrolyte solution obtained by dissolving a supporting electrolyte in an organic solvent. The supporting electrolyte of a lithium ion secondary battery may, for example, be a lithium salt. Examples of lithium salts that can be used include LiPF₆, LiAsF₆, LiBF₄, LiSbF₆, LiAlCl4, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation, and LiPF₆ is particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of these solvents may be used. Of these solvents, carbonates are preferable due to having high permittivity and a wide stable potential region, and a mixture of ethylene carbonate and ethyl methyl carbonate is more preferable.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Known additives such as fluoroethylene carbonate and ethyl methyl sulfone may be added to the electrolyte solution.

### <Production method of secondary battery>

The presently disclosed secondary battery may be produced, for example, by stacking the positive electrode and the negative electrode with the separator in-between, performing rolling, folding, or the like of the resultant laminate in accordance with the battery shape as necessary to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

Besides being used in production of the presently disclosed slurry composition for a secondary battery electrode set forth above, the presently disclosed binder composition can alternatively be used in production of a slurry composition for a porous membrane of a secondary battery such as a lithium ion secondary battery. Moreover, the slurry for a secondary battery porous membrane can be used to form a porous membrane for a secondary battery. Furthermore, the porous membrane for a secondary battery can be used to produce a secondary battery such as a lithium ion secondary battery.

### EXAMPLES

The following describes the present disclosure based on examples. However, the present disclosure is not limited to the following examples. In the following description, "%" and "parts" used in expressing quantities are by mass, unless otherwise specified. Moreover, the proportion of each monomer unit in a polymer is normally the same as the ratio (charging ratio) of a monomer that can form that monomer unit in a monomer composition used in polymerization of the polymer.

In the examples and comparative examples, the following methods were used to measure and evaluate glass-transition temperature, iodine value, weight-average molecular weight of a polymer, viscosity, dispersibility of a conductive material, dispersion stability of a slurry composition for a positive electrode, and battery characteristics of a secondary battery.

### <Glass-transition temperature>

The glass-transition temperature of a polymer was measured as follows.

Measurement was performed based on JIS K 7121(1987) using a differential scanning calorimeter (DSC6220 produced by SII Nanotechnology).

### <Iodine value>

The iodine value of a polymer was measured as follows.

After coagulating 100 g of a water dispersion (binder composition) of the polymer in 1 L of methanol, vacuum drying was performed at a temperature of 60°C for 12 hours. The iodine value of the dried polymer obtained in this manner was evaluated in accordance with JIS K 6235(2006).

### <Weight-average molecular weight of polymer>

The weight-average molecular weight of a polymer was measured by gel permeation chromatography (GPC). Specifically, the weight-average molecular weight was calculated as a standard substance-equivalent value by preparing a calibration curve for a standard substance using polystyrene. The measurement conditions were as shown below.

### «Measurement conditions»

The measurement apparatus was as follows.
Column: TSKgel α-M × 2 (7.8 mm I.D. × 30 cm × 2 columns; produced by Tosoh Corporation)
Eluent: Dimethylformamide (50 mM lithium bromide, 10 mM phosphoric acid)
Flow rate: 0.5 mL/min
Sample concentration: Approximately 0.5 g/L (solid content concentration)
Injection volume: 200 µL
Column temperature: 40°C
Detector: Differential refractive index detector RI (HLC-8320 GPC RI detector produced by Tosoh Corporation)
Detector conditions: RI: Pol (+), Res (1.0 s)
Molecular weight marker: Standard polystyrene kit PStQuick K produced by Tosoh Corporation

### <Viscosity>

The viscosity of a produced binder composition for a positive electrode (solid content concentration: 8%) was measured by a B-type viscometer under conditions of a temperature of 25°C and a rotation speed of 60 rpm.

### <Dispersibility of conductive material>

The viscosity of a produced conductive material paste for a positive electrode (solid content concentration: 4%) was measured by a rheometer (MCR 302 produced by Anton Paar GmbH) under conditions of a temperature of 25°C and a shear rate of 0.1 s⁻¹. Dispersibility of the conductive material was evaluated by the following standard. A lower viscosity at the same solid content concentration indicates better conductive material dispersibility.
A: Viscosity of less than 250 Pa·s
B: Viscosity of not less than 250 Pa·s and less than 500 Pa·s
C: Viscosity of 500 Pa·s or more

### <Dispersion stability of slurry composition for positive electrode>

The viscosity of a slurry composition for a positive electrode straight after production was measured by a B-type viscometer under conditions of a temperature of 25°C and a rotation speed of 60 rpm, and the measured viscosity was taken to be η0. Next, the slurry composition for a positive electrode was left at 25°C for 1 week (168 hours) in a hermetically sealed state. The viscosity of the slurry composition for a positive electrode after being left for 1 week was measured under the same conditions as for before being left for 1 week, and the measured viscosity was taken to be η1. The rate of viscosity change Δη was calculated from η0 and η1 (Δη = η1/η0 × 100%). The dispersion stability of the slurry composition for a positive electrode was then evaluated by the following standard.

A rate of viscosity change closer to 100% indicates that the slurry composition for a positive electrode has better dispersion stability.
A: Rate of viscosity change of less than 150%
B: Rate of viscosity change of not less than 150% and less than 300%
C: Rate of viscosity change of 300% or more

### <Battery characteristics of secondary battery>

A produced secondary battery was constant-current charged to a battery voltage of 4.2 V at 0.2C and was then constant-voltage charged to a charging current of 0.02C at 4.2 V in a 25°C environment. Next, the secondary battery was constant-current discharged to a battery voltage of 3.87 V (SOC: 50%) at 0.2C. Thereafter, the voltage change after 30 seconds of discharging was measured at each of 0.2C, 0.5C, 1.0C, 2.0C, 2.5C, and 3.0C. A plot of each of the discharge currents and the measured voltage changes was prepared, and the gradient of this plot was taken to be a resistance value (Ω). Battery characteristics of the secondary battery were evaluated by the following standard. A smaller resistance value indicates that the secondary battery has better battery characteristics.
A: Resistance value of less than 4 Ω
B: Resistance value of not less than 4 Ω and less than 6 Ω
C: Resistance value of 6 Ω or more

### (Example 1)

### <Production of polymer>

A reactor was charged with 180 parts of deionized water, 25 parts of sodium dodecylbenzenesulfonate aqueous solution of 10% in concentration, 23 parts of acrylonitrile as a nitrile group-containing monomer, 43 parts of styrene as an aromatic vinyl monomer, 4 parts of methacrylic acid as a hydrophilic group-containing monomer, and 2 parts of t-dodecyl mercaptan as a chain transfer agent in this order. Next, gas inside of the reactor was purged with nitrogen three times, and then 30 parts of 1,3-butadiene was added as a conjugated diene monomer through which a linear alkylene structural unit can be introduced into a polymer. The reactor was maintained at 10°C while 0.1 parts of cumene hydroperoxide as a polymerization initiator and appropriate amounts of a reducing agent and a chelating agent were added, and a polymerization reaction was continued under stirring. At the point at which the polymerization conversion rate reached 85%, 0.1 parts of hydroquinone aqueous solution of 10% in concentration was added as a polymerization inhibitor to terminate the polymerization reaction. Next, residual monomer was removed at a water temperature of 80°C to obtain a water dispersion of a polymer precursor (particulate polymer).

The water dispersion of the polymer precursor that was obtained and palladium catalyst (solution obtained by mixing 1% palladium acetate acetone solution and an equivalent weight of deionized water) were added into an autoclave such that the palladium content relative to the weight of solid content contained in the water dispersion of the polymer precursor was 5,000 ppm, and a hydrogenation reaction was carried out for 6 hours at a hydrogen pressure of 3 MPa and a temperature of 50°C to obtain a water dispersion of a target polymer.

### <Production of binder composition for positive electrode>

The water dispersion of the polymer and an appropriate amount of NMP as an organic solvent were mixed. Water contained in the resultant mixture was completely evaporated under reduced pressure to obtain a binder composition for a positive electrode containing the polymer and NMP.

### <Production of conductive material paste for positive electrode>

A conductive material paste for a positive electrode was produced by stirring 1.0 parts of carbon nanotubes (specific surface area: 150 m²/g) as a conductive material, 0.04 parts (in terms of solid content) of the binder composition, and NMP using a disper blade (10 minutes at 3,000 rpm) and then using a bead mill in which zirconia beads of 1 mm in diameter were used to mix these materials for 1 hour at a circumferential speed of 8 m/s. Note that the additive amount of NMP was adjusted such that the solid content concentration of the obtained conductive material paste for a positive electrode was 4 mass%. Moreover, the obtained conductive material paste for a positive electrode was used to evaluate dispersibility of the conductive material. The result is shown in Table 1.

### <Production of slurry composition for positive electrode>

A slurry composition for a positive electrode was produced by adding 100 parts of a three-component active material having a layered structure (LiNi_{0.5}Co_{0.2}Mn_{0.3}O₂; average particle diameter: 10 µm) as a positive electrode active material, 0.96 parts in terms of solid content of polyvinylidene fluoride (PVdF) as another polymer, and NMP as an organic solvent to the conductive material paste for a positive electrode obtained as described above, and stirring these materials in a planetary mixer (30 minutes at 60 rpm). Note that the additive amount of NMP was adjusted such that the viscosity of the obtained slurry composition for a positive electrode was within a range of 4,000 mPa·s to 5,000 mPa·s (measured in accordance with JIS Z 8803:1991 by a single cylinder rotary viscometer; temperature: 25°C; rotation speed: 60 rpm). Moreover, the obtained slurry composition for a positive electrode was used to evaluate dispersion stability. The result is shown in Table 1.

### <Production of positive electrode>

Aluminum foil of 20 µm in thickness was prepared as a current collector. The slurry composition for a positive electrode was applied onto the aluminum foil by a comma coater such as to have a coating weight after drying of 20 mg/cm². Drying was performed at 90°C for 20 minutes and at 120°C for 20 minutes, and then heat treatment was performed at 60°C for 10 hours to obtain a positive electrode web. This positive electrode web was rolled by roll pressing to produce a sheet-shaped positive electrode including a positive electrode mixed material layer of 3.2 g/cm³ in density and aluminum foil. The thickness of the sheet-shaped positive electrode was 70 µm . The sheet-shaped positive electrode was cut to 4.8 cm in width and 50 cm in length to obtain a positive electrode for a lithium ion secondary battery.

### <Production of negative electrode>

A slurry composition for a negative electrode was produced by stirring a mixture of 90 parts of spherical artificial graphite (volume-average particle diameter: 12 µm) and 10 parts of SiOₓ (volume-average particle diameter: 10 µm) as a negative electrode active material, 1 part of a styrene butadiene polymer as a binder, 1 part of carboxymethyl cellulose as a thickener, and an appropriate amount of water as a dispersion medium in a planetary mixer.

Next, copper foil of 15 µm in thickness was prepared as a current collector. The slurry composition for a negative electrode was applied onto both sides of the copper foil such that the coating weight at each side was 10 mg/cm², and was dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode including a negative electrode mixed material layer of 1.8 g/cm³ in density (both sides) and copper foil. The sheet-shaped negative electrode was cut to 5.0 cm in width and 52 cm in length to obtain a negative electrode for a lithium ion secondary battery.

### <Preparation of separator>

A separator made from a single layer of polypropylene (produced by Celgard, LLC.; product name: Celgard 2500) was cut out as 120 cm × 5.5 cm.

### <Production of lithium ion secondary battery>

The positive electrode and the negative electrode were wound around a core of 20 mm in diameter with the separator (fine porous membrane made from polypropylene of 15 µm in thickness) interposed therebetween to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

An electrolyte solution (chemical composition: LiPF₆ solution of 1.0 M in concentration (solvent: mixed solution obtained by adding 5 mass% of fluoroethylene carbonate to a mixed solvent of ethylene carbonate/ethyl methyl carbonate = 3/7 (mass ratio); additive: 2 volume% of vinylene carbonate)) was also prepared.

The compressed roll was subsequently housed in a laminate case made from aluminum together with 3.2 g of the non-aqueous electrolyte solution. After connecting a nickel lead at a specific location on the negative electrode and an aluminum lead at a specific location on the positive electrode, an opening of the case was sealed by heat to obtain a lithium ion secondary battery. The lithium ion secondary battery had a pouch shape of 35 mm in width, 48 mm in height, and 5 mm in thickness, and the battery nominal capacity was 700 mAh. The obtained lithium ion secondary battery was used to evaluate battery characteristics. The result is shown in Table 1.

### (Examples 2 to 5)

A polymer, a binder composition for a positive electrode, a conductive material paste for a positive electrode, a slurry composition for a positive electrode, a positive electrode, a negative electrode, and a lithium ion secondary battery were produced in the same way as in Example 1 with the exception that the charged amounts of acrylonitrile, styrene, and 1,3-butadiene in production of the polymer were changed such that the ratios of monomer units were changed to amounts shown in Table 1. Various evaluations were conducted in the same manner as in Example 1. The results are shown in Table 1.

### (Examples 6 to 9)

A polymer, a binder composition for a positive electrode, a conductive material paste for a positive electrode, a slurry composition for a positive electrode, a positive electrode, a negative electrode, and a lithium ion secondary battery were produced in the same way as in Example 1 with the exception that the charged amount of t-dodecyl mercaptan as a chain transfer agent in production of the polymer was changed to an amount shown in Table 1. Various evaluations were conducted in the same manner as in Example 1. The results are shown in Table 1.

### (Comparative Example 1)

A polymer, a binder composition for a positive electrode, a conductive material paste for a positive electrode, a slurry composition for a positive electrode, a positive electrode, a negative electrode, and a lithium ion secondary battery were produced in the same way as in Example 1 with the exception that the charged amounts of acrylonitrile, styrene, methacrylic acid, and t-dodecyl mercaptan in production of the polymer were changed to amounts shown in Table 1. Various evaluations were conducted in the same manner as in Example 1. The results are shown in Table 1.

### (Comparative Example 2)

A polymer, a binder composition for a positive electrode, a conductive material paste for a positive electrode, a slurry composition for a positive electrode, a positive electrode, a negative electrode, and a lithium ion secondary battery were produced in the same way as in Example 1 with the exception that styrene and methacrylic acid were not used in production of the polymer, and the charged amounts of acrylonitrile, 1,3-butadiene, and t-dodecyl mercaptan were changed to amounts shown in Table 1. Various evaluations were performed in the same manner as in Example 1. The results are shown in Table 1.

In Table 1, shown below:
"AN" indicates acrylonitrile;
"ST" indicates styrene;
"MAA" indicates methacrylic acid;
"Et (hydrogenated BD)" indicates hydrogenated 1,3-butadiene unit; and
"TDM" indicates t-dodecyl mercaptan.

**Table 1**

| | | | | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|---|---|---|
| | | Nitrile group-containing monomer unit | | AN | AN | AN | AN | AN | AN | AN | AN | AN | AN | AN |
| | | Proportional content [mass%] | | 23 | 39 | 35 | 18 | 12 | 23 | 23 | 23 | 23 | 20 | 35 |
| | | Aromatic vinyl monomer unit | | ST | ST | ST | ST | ST | ST | ST | ST | ST | ST | ST |
| | | Proportional content [mass%] | | 43 | 5 | 15 | 54 | 69 | 43 | 43 | 43 | 43 | 45 | 0 |
| | | Hydrophilic group-containing monomer unit | | MAA | MAA | MAA | MAA | MAA | MAA | MAA | MAA | MAA | MAA | MAA |
| | | Proportional content [mass%] | | 4 | 4 | 4 | 4 | 4 | 4 | 4 | 4 | 4 | 5 | 0 |
| | | Linear alkylene structural unit | | Et (hydrogenated BD) | Et (hydrogenated BD) | Et (hydrogenated BD) | Et (hydrogenated BD) | Et (hydrogenated BD) | Et (hydrogenated BD) | Et (hydrogenated BD) | Et (hydrogenated BD) | Et (hydrogenated BD) | Et (hydrogenated BD) | Et (hydrogenated BD) |
| Binder composition | Polymer | Proportional content [mass%] | | 30 | 52 | 46 | 24 | 15 | 30 | 30 | 30 | 30 | 30 | 65 |
| | | Chain transfer agent (TDM) [parts by mass/100 parts by mass of monomer] | | 2.0 | 2.0 | 2.0 | 2.0 | 2.0 | 2.5 | 1.8 | 1.6 | 1.0 | 0.6 | 0.7 |
| | | Physical properties | Glass-transition temperature (Tg) [°C] | 20 | -20 | -10 | 35 | 55 | 20 | 20 | 20 | 20 | 24 | -23 |
| | | | Iodine value [mg/100 mg] | 11 | 12 | 12 | 12 | 11 | 9 | 9 | 9 | 9 | 9 | 3 |
| | | | Weight -average molecular weight (Mw) [× 10³ ] | 50 | 50 | 50 | 50 | 50 | 20 | 80 | 120 | 190 | 520 | 110 |
| | | | Viscosity (NMP 8%) [mPa·s] | 28 | 195 | 105 | 25 | 23 | 15 | 60 | 180 | 380 | 2100 | 450 |
| Evaluation | Dispersibility of conductive material | | | A | B | A | A | B | A | A | B | B | C | C |
| | Dispersion stability of slurry composition for positive electrode | | | A | B | A | B | B | A | A | B | B | C | C |
| | Battery characteristics of secondary battery | | | A | A | A | B | B | A | A | A | B | C | C |

It can be seen from Table 1 that in Examples 1 to 9 in which the used binder composition for a positive electrode contained a polymer that included a nitrile group-containing monomer unit, an aromatic vinyl monomer unit, and a linear alkylene structural unit and that had a specific viscosity as an NMP solution having a solid content of 8 mass%, it was possible to disperse a conductive material well and obtain a slurry composition for a positive electrode having excellent dispersion stability, and, as a result, a secondary battery having excellent battery characteristics was obtained.

It can also be seen from Table 1 that in Comparative Example 1 in which the used binder composition for a positive electrode contained a polymer that did not have a specific viscosity as an NMP solution of 8 mass% in concentration, it was not possible to disperse a conductive material well and obtain a slurry composition for a positive electrode having excellent dispersion stability, and, as a result, battery characteristics of the obtained secondary battery were poor.

It can also be seen from Table 1 that in Comparative Example 2 in which the used binder for a positive electrode contained a polymer that did not include an aromatic vinyl monomer unit and did not have a specific viscosity as an NMP solution having a solid content of 8 mass%, it was not possible to disperse a conductive material well and obtain a slurry composition for a positive electrode having excellent dispersion stability, and, as a result, battery characteristics of the obtained secondary battery were poor.

### INDUSTRIAL APPLICABILITY

According to the present disclosure, it is possible to provide a binder composition for a secondary battery that enables good dispersion of a conductive material and with which a slurry composition for a secondary battery having excellent dispersion stability is obtained.

Moreover, according to the present disclosure, it is possible to provide a conductive material paste for a secondary battery electrode in which a conductive material is well dispersed and that has excellent dispersibility.

Furthermore, according to the present disclosure, it is possible to provide a slurry composition for a secondary battery in which a conductive material is well dispersed and that has excellent dispersion stability.

Also, according to the present disclosure, it is possible to provide an electrode for a secondary battery that can sufficiently improve battery characteristics of a secondary battery, and also a secondary battery that has excellent battery characteristics such as output characteristics.

## Claims

1. A binder composition for a secondary battery comprising: a polymer including a nitrile group-containing monomer unit, an aromatic vinyl monomer unit, and a linear alkylene structural unit; and a solvent, wherein
the polymer has a viscosity of not less than 10 mPa·s and not more than 400 mPa·s as an N-methyl-2-pyrrolidone solution of 8 mass% in concentration.

2. The binder composition for a secondary battery according to claim 1, wherein the polymer includes the aromatic vinyl monomer unit in a proportion of not less than 5 mass% and not more than 70 mass%.

3. The binder composition for a secondary battery according to claim 1 or 2, wherein the polymer has a weight-average molecular weight of not less than 10,000 and not more than 200,000.

4. The binder composition for a secondary battery according to any one of claims 1 to 3, wherein the polymer has a weight-average molecular weight of not less than 20,000 and not more than 90,000.

5. A conductive material paste for a secondary battery electrode comprising: the binder composition for a secondary battery according to any one of claims 1 to 4; and a conductive material.

6. A slurry composition for a secondary battery electrode comprising: the binder composition for a secondary battery according to any one of claims 1 to 4; an electrode active material; and a conductive material.

7. A method of producing the slurry composition for a secondary battery electrode according to claim 6, comprising:
a first step of mixing the conductive material, the polymer, and the solvent to obtain a conductive material paste; and
a second step of mixing the conductive material paste and the electrode active material.

8. An electrode for a secondary battery comprising an electrode mixed material layer formed using the slurry composition for a secondary battery electrode according to claim 6.

9. A secondary battery comprising the electrode for a secondary battery according to claim 8.
